# FASCICULE DE BREVET EUROPEEN

(11) **EP 2 388 631 B1**
(45) Date de publication et mention de la délivrance du brevet: **11.11.2015**
(21) Numéro de dépôt: 11166484.3
(22) Date de dépôt: 18.05.2011
(51) Int. Cl.: G02B 6/44

(54) **Boitier de raccordement de fibres optiques**
Anschlusskasten für Glasfaserkabel
Box for connecting optical fibres

(30) Priorité: 20.05.2010 FR 1053918
(43) Date de publication de la demande: 23.11.2011
(73) Titulaire: Nexans, 75008 Paris (FR)
(72) Inventeur: Apere, Rodolphe, 78570 Andresy (FR); Renard, Xavier, 78410 Aubergenville (FR)
(74) Mandataire: Gauer, Pierre

(56) Documents cités:
- EP-B1- 0 204 820
- WO-A1-97/44872
- US-A- 5 124 506
- US-A- 5 449 860
- US-B1- 6 435 727

## Description

La présente invention a pour objet un boîtier de raccordement de fibres optiques. Elle concerne en particulier un boîtier permettant de raccorder des fibres optiques d'un utilisateur à des fibres optiques issues d'un câble d'acheminement de fibres optiques.

Un réseau FTTH est un réseau de télécommunications dont la partie terminale arrivant chez l'utilisateur est constituée de fibres optique. FTTH est l'abréviation du terme anglais « Fiber To The Home », signifiant littéralement en français « fibre jusqu'au foyer ». Il s'agit du nom d'une technologie visant à remplacer les technologies DSL (Digital Subscriber Line en langue anglaise).

Des boîtiers de raccordement sont connus des documents US 5,449,860, US 5,124,506 et EP 0 204 820.

Le développement récent des programmes FTTH implique une durée d'installation réduite du boîtier chez l'utilisateur. Il implique également que l'installation chez l'utilisateur soit à la portée de tout technicien, y compris d'un technicien non spécialiste de la fibre optique. En particulier, le technicien non spécialiste de la fibre optique ne doit pas dégrader la fiabilité de la connexion optique. Ainsi, les connexions optiques ne doivent pas être endommagées et le technicien ne doit pas avoir à lover à nouveau les fibres.

La fixation classique des boîtiers sur un mur ou sur un boîtier encastré nécessite l'ouverture du boîtier pour avoir accès aux zones de fixation. Une fois le boîtier ouvert, des éléments de protection sont prévus à l'intérieur du boîtier pour protéger la fibre. Ces éléments de protection peuvent par exemple être des chemins de fibre protégés, des doigts de protection, ou encore du plexiglas de protection.

Toutefois, ces éléments de protection ne permettent pas de protéger les raccords de fibres optiques ni les connecteurs reliés aux raccords, car les raccords et les connecteurs doivent être accessibles pour une installation sur site ou pour de la maintenance. La présence des éléments de protection n'exclut donc pas tout risque d'endommagement du raccordement optique.

Il a été envisagé de mettre des trous de fixation sur le pourtour extérieur du boîtier, mais cette solution augmente la taille du boîtier.

Il a également été envisagé d'utiliser une embase indépendante additionnelle, à fixer au mur, puis de clipser le boîtier sur l'embase. Ceci a pour inconvénient d'augmenter le prix du produit et de nécessiter une mise en oeuvre plus longue et plus complexe.

L'invention vise à remédier à ces inconvénients.

L'invention propose en particulier un boîtier de raccordement de fibres optiques qui permet de fixer aisément et de manière compacte sur un support de fixation un boîtier de raccordement de fibres optiques.

L'invention a ainsi pour objet un boîtier de raccordement de fibres optiques, comprenant un corps de boîtier muni d'au moins une ouverture de fixation permettant la fixation du corps de boîtier à un support de fixation à l'aide d'un moyen de fixation, ainsi qu'un couvercle apte à recouvrir le corps de boîtier.

Conformément à l'invention, le couvercle comprend au moins une ouverture de passage associée à une ouverture de fixation du corps de boîtier, chaque ouverture de passage du couvercle permettant un passage dudit moyen de fixation depuis l'extérieur du boîtier vers son ouverture de fixation associée du corps de boîtier, et le couvercle recouvre de manière amovible le corps de boîtier, de sorte qu'il est possible d'ôter le couvercle lorsque le corps de boîtier est fixé au support de fixation.

Grâce à l'ouverture de passage, il n'est pas nécessaire d'ouvrir le boîtier pour le fixer, ce qui évite ainsi d'endommager les liaisons optiques.

Le corps de boîtier peut comprendre deux ouvertures de fixation et le couvercle peut comprendre deux ouvertures de passage.

Le couvercle peut être muni d'un conduit de passage associé à chaque ouverture de passage et destiné à entourer le moyen de fixation.

Chaque conduit de passage du couvercle peut être associé à un conduit de passage coaxial du corps de boîtier.

Chaque conduit de passage du couvercle peut former avec son conduit de passage associé du corps de boîtier un conduit continu en configuration opérationnelle du boîtier.

Le boîtier peut comprendre au moins un bouchon destiné à obturer la ou les ouvertures de passage.

Le corps de boîtier peut comprendre au moins une cassette de lovage de fibres et de maintien d'épissures, et au moins un raccord apte à raccorder des fibres optiques d'un utilisateur à des fibres optiques issues d'un câble d'acheminement de fibres optiques.

D'autres caractéristiques et avantages de la présente invention apparaîtront plus clairement à la lecture de la description suivante, donnée à titre d'exemple illustratif et non limitatif et faite en référence aux dessins annexés sur lesquels :
- la figure 1 est une vue en perspective éclatée d'un boîtier selon l'invention,
- la figure 2 est une vue partielle de l'intérieur du boîtier, et
- la figure 3 est une vue de face de l'intérieur du boîtier.

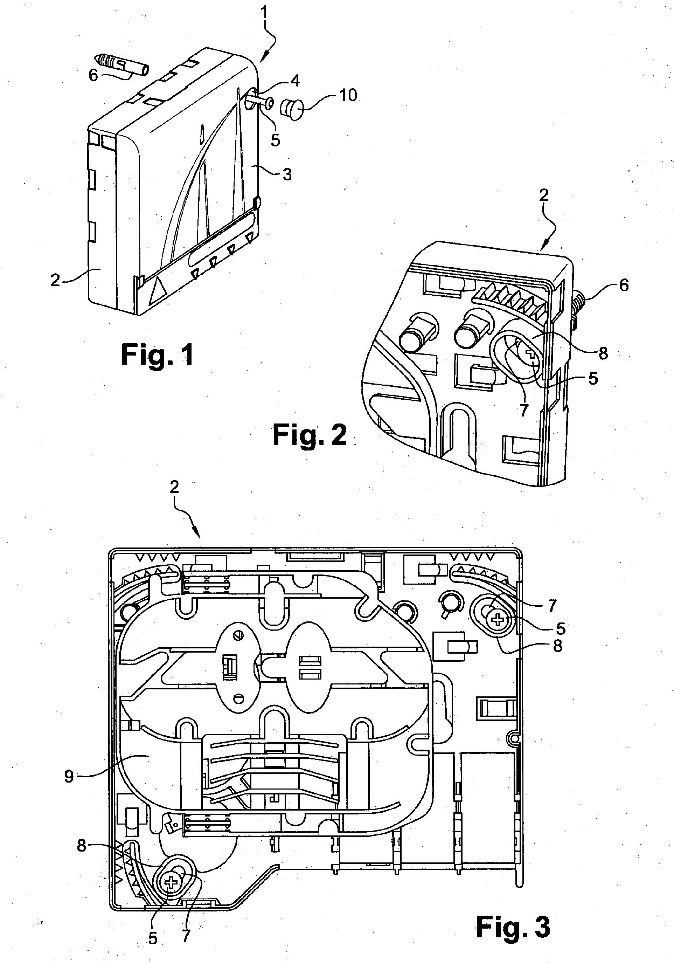

Le boîtier 1 selon l'invention, tel qu'illustré à la figure 1, comprend un corps de boîtier 2 recouvert par un couvercle 3. Conformément à l'invention, le couvercle 3 du corps de boîtier 2 comprend au moins une ouverture 4 de passage. L'ouverture 4 de passage permet le passage d'une vis 5 destinée à fixer le corps de boîtier 2 sur un support de fixation, tel qu'un mur ou un boîtier encastré.

La fixation du corps de boîtier 2 sur le support de fixation peut être réalisée à l'aide d'une cheville 6. La cheville 6 est enfoncée dans le support de fixation, puis on insère la vis 5 dans la cheville 6 pour fixer le boîtier 1. Un bouchon 10 permet d'obturer l'ouverture 4 de passage. Grâce à ce mode de fixation, il n'est ainsi pas nécessaire d'ouvrir le boîtier 1 pour le fixer et les liaisons optiques ne peuvent pas être endommagées. Tout technicien peut installer le boîtier, sans même savoir qu'il s'agit d'un boîtier de raccordement de fibres optiques avec des règles d'installation spécifiques.

Le câble d'acheminement de fibres optiques est avantageusement pré-installé, c'est-à-dire que le câble est pré-raccordé à au moins un raccord apte à raccorder des fibres d'un utilisateur aux fibres issues du câble d'acheminement. On dit dans ce cas que le boîtier 1 est pré-câblé.

La figure 2 illustre une partie du corps de boîtier 2 comprenant une ouverture 7 de fixation. La tête de la vis 5 repose sur une butée délimitant l'ouverture 7 de fixation. Le corps de boîtier 2 comprend avantageusement un conduit 8 de passage de vis de forme allongée entourant la vis 5 et destiné à empêcher davantage une mise en contact du tournevis avec une fibre optique dans le boîtier. Le conduit de passage 8 du corps de boîtier peut être associé à un conduit de passage coaxial issu du couvercle 3 et délimitant l'ouverture 4 de passage, de manière à former un passage continu autour de la vis 5 entre le support de fixation et la surface extérieure du couvercle 3 lorsque le couvercle 3 est disposé sur le corps de boîtier 2.

Le corps de boîtier 2 peut comprendre une ou plusieurs ouvertures 7 de fixation. Il peut ainsi comprendre deux ouvertures 7 de fixation, disposées par exemple dans deux coins opposés du corps de boîtier 2, tel qu'illustré à la figure 3, sur laquelle les éléments identiques à ceux des figures 1 et 2 portent les mêmes références. Le corps de boîtier 2 est destiné à accueillir une ou plusieurs cassettes 9 de lovage de fibres et de maintien d'épissures ainsi qu'un ou plusieurs raccords de fibres optiques, non représentés.

Dans le cas où on souhaite fixer le boîtier de raccordement dans un boîtier encastré, on peut disposer à l'arrière du boîtier de raccordement un tambour destiné à être logé dans le boîtier encastré. A la place des vis de fixation du boîtier encastré, on peut utiliser les vis de fixation de boîtier de raccordement, ce qui permet d'éviter l'ouverture du boîtier de raccordement.

## Revendications

1. Boîtier (1) de raccordement de fibres optiques, comprenant un corps de boîtier (2) muni d'au moins une ouverture (7) de fixation permettant la fixation du corps de boîtier (2) à un support de fixation à l'aide d'un moyen de fixation (5), ainsi qu'un couvercle (3) apte à recouvrir le corps de boîtier (2), **caractérisé en ce que** le couvercle (3) comprend au moins une ouverture (4) de passage associée à une ouverture (7) de fixation du corps de boîtier (2), chaque ouverture (4) de passage du couvercle (3) permettant un passage dudit moyen de fixation (5) depuis l'extérieur du boîtier (1) vers son ouverture (7) de fixation associée du corps de boîtier (2), et **en ce que** le couvercle (3) recouvre de manière amovible le corps de boîtier (2), de sorte qu'il est possible d'ôter le couvercle (3) lorsque le corps de boîtier (2) est fixé au support de fixation.

2. Boîtier (1) selon la revendication 1, **caractérisé en ce que** le corps de boîtier (2) comprend deux ouvertures (7) de fixation et **en ce que** le couvercle (3) comprend deux ouvertures (4) de passage.

3. Boîtier (1) selon la revendication 1 ou 2, **caractérisé en ce que** le couvercle (3) est muni d'un conduit de passage associé à chaque ouverture (4) de passage et destiné à entourer le moyen de fixation (5).

4. Boîtier (1) selon la revendication 3, **caractérisé en ce que** chaque conduit de passage du couvercle (3) est associé à un conduit de passage (8) coaxial du corps de boîtier (2).

5. Boîtier (1) selon la revendication 4, **caractérisé en ce que** chaque conduit de passage du couvercle (3) forme avec son conduit de passage (8) associé du corps de boîtier (2) un conduit continu en configuration opérationnelle du boîtier (1).

6. Boîtier (1) selon l'une des revendications 1 à 5, **caractérisé en ce qu'**il comprend au moins un bouchon (10) destiné à obturer la ou les ouvertures (4) de passage.

7. Boîtier (1) selon l'une des revendications 1 à 6, **caractérisé en ce que** le corps de boîtier (2) comprend au moins une cassette (9) de lovage de fibres et de maintien d'épissures, et au moins un raccord apte à raccorder des fibres optiques d'un utilisateur à des fibres optiques issues d'un câble d'acheminement de fibres optiques.

## Patentansprüche

1. Kasten (1) für den Anschluss von Glasfaserkabeln, umfassend einen Kastenkörper (2), der mit mindestens einer Befestigungsöffnung (7) ausgestattet ist, die die Befestigung des Kastenkörpers (2) auf einer Befestigungsunterlage mit Hilfe eines Befestigungsmittels (5) erlaubt, sowie einen Deckel (3), der imstande ist, den Kastenkörper (2) abzudecken, **dadurch gekennzeichnet, dass** der Deckel (3) mindestens eine einer Befestigungsöffnung (7) des Kastenkörpers (2) zugeordnete Durchgangsöffnung (4) umfasst, wobei jede Durchgangsöffnung (4) des Deckels (3) einen Durchgang des Befestigungsmittels (5) von außerhalb des Kastens (1) zu seiner dem Kastenkörper (2) zugeordneten Befestigungsöffnung erlaubt, und dass der Deckel (3) den Kastenkörper (2) lösbar abdeckt, so dass es möglich ist, den Deckel (3) abzunehmen, wenn der Kastenkörper (2) auf der Befestigungsunterlage befestigt ist.

2. Kasten (1) nach Anspruch 1, **dadurch gekennzeichnet, dass** der Kastenkörper (2) zwei Befestigungsöffnungen (7) umfasst und dass der Deckel (3) zwei Durchgangsöffnungen (4) umfasst.

3. Kasten (1) nach Anspruch 1 oder 2, **dadurch gekennzeichnet, dass** der Deckel (3) mit einer Durchgangsführung ausgestattet ist, die jeder Durchgangsöffnung (4) zugeordnet ist und bestimmt ist, das Befestigungsmittel (5) zu umschließen.

4. Kasten (1) nach Anspruch 3, **dadurch gekennzeichnet, dass** jede Durchgangsführung des Deckels (3) einer koaxialen Durchgangsführung (8) des Kastenkörpers (2) zugeordnet ist.

5. Kasten (1) nach Anspruch 4, **dadurch gekennzeichnet, dass** jede Durchgangsführung des Deckels (3) mit ihrer zugeordneten Durchgangsführung (8) des Kastenkörpers (2) in operativer Konfiguration des Kasten (1) eine kontinuierliche Führung bildet.

6. Kasten (1) nach einem der Ansprüche 1 bis 5, **dadurch gekennzeichnet, dass** er mindestens einen Stopfen (10) umfasst, der zum Verschließen der Durchgangsöffnung(en) (4) bestimmt ist.

7. Kasten (1) nach einem der Ansprüche 1 bis 6, **dadurch gekennzeichnet, dass** der Kastenkörper (2) mindestens eine Kassette (9) zum Aufwickeln von Fasern und zum Erhalt von Spleißungen umfasst und mindestens eine Verbindung, die imstande ist, Glasfaserkabel eines Benutzers mit Glasfaserkabeln aus einem Glasfaserkabel-Zufuhrkabel zu verbinden.

## Claims

1. An optical fiber connecting housing (1), comprising a housing body (2) provided with at least one fastening opening (7) allowing the fastening of the housing body (2) to a fastening support using a fastening means (5), as well as a lid (3) able to cover the housing body (2), **characterized in that** the lid (3) comprises at least one passage opening (4) associated with a fastening opening (7) of the housing body (2), each passage opening (4) of the lid (3) allowing the passage of said fastening means (5) from the outside of the housing (1) toward its associated fastening opening (7) of the housing body (2), and **in that** the lid (3) removably covers the housing body (2), such that it is possible to remove the lid (3) when the housing body (2) is fastened to the fastening support.

2. The housing (1) according to claim 1, **characterized in that** the housing body (2) comprises two fastening openings (7) and **in that** the lid (3) comprises two passage openings (4).

3. The housing (1) according to claim 1 or 2, **characterized in** the lid (3) is provided with a passage duct associated with each passage opening (4) and designed to surround the fastening means (5).

4. The housing (1) according to claim 3, **characterized in that** each passage duct of the lid (3) is associated with a coaxial passage duct (8) of the housing body (2).

5. The housing (1) according to claim 4, **characterized in that** each passage duct of the lid (3) forms, with its associated passage duct (8) of the housing body (2), a continuous duct in the operational configuration of the housing (1).

6. The housing (1) according to one of claims 1 to 5, **characterized in that** it comprises at least one stopper (10) designed to close off the passage opening(s) (4).

7. The housing (1) according to one of claims 1 to 6, **characterized in that** the housing body (2) comprises at least one cassette for coiling fibers and maintaining splices, and at least one fitting able to connect the optical fibers of a user to optical fibers from a fiber-optic cable.
